# EUROPÄISCHE PATENTSCHRIFT

(11) **EP 1 119 437 B1**
(45) Veröffentlichungstag und Bekanntmachung des Hinweises auf die Patenterteilung: **22.10.2003**
(21) Anmeldenummer: 00949430.3
(22) Anmeldetag: 01.08.2000
(51) Int. Cl.: B23K 26/08

(54) **VORRICHTUNG ZUR BEHANDLUNG EINES SUBSTRATES MITTELS LASERSTRAHLUNG**
DEVICE FOR TREATING A SUBSTRATE WITH LASER RADIATION
DISPOSITIF POUR TRAITER UN SUBSTRAT AU MOYEN D'UN RAYONNEMENT LASER

(30) Priorität: 06.08.1999 DE 19937267
(43) Veröffentlichungstag der Anmeldung: 01.08.2001
(73) Patentinhaber: Carl Baasel Lasertechnik GmbH, 82304 Starnberg (DE)
(72) Erfinder: PAUL, Helmut, D-85221 Dachau (DE)
(74) Vertreter: Mörtel & Höfner
(86) Internationale Anmeldenummer: EP0007427
(87) Internationale Veröffentlichungsnummer: WO01010594

(56) Entgegenhaltungen:
- EP-A- 0 028 615
- DE-A- 4 009 113
- DE-A- 19 511 393
- DE-A- 19 713 826
- FR-A- 2 130 698

## Beschreibung

Bei der Anwendung von Lasern zur Behandlung oder Bearbeitung von Substraten ist es häufig erforderlich, eine gleichzeitige oder nahezu gleichzeitige Beaufschlagung des Substrats in mehreren Zielgebieten vorzusehen. Aus dem Stand der Technik sind hierzu verschiedene Ausgestaltungen bekannt, bei denen jeweils ein eintretender Laserstrahl mit einem sich drehenden Polygonspiegel über eine Reihe von nebeneinander liegenden, fokussierenden Elementen geschwenkt wird, wodurch aufeinanderfolgend eine entsprechende Anzahl von Zielpunkten beaufschlagt wird (FR-A- 2 130 698, EP 0 028 615 B1, DE 195 11 393 A1). Mit den bekannten Geräten ist es möglich, mehrere Spuren Perforationslöcher nebeneinander in einem bahnförmigen Material zu erzeugen. Die geringe Energie, welche zur Erzeugung eines Perforationsloches benötigt wird, erlaubt die Verwendung sehr hoher Polygondrehzahlen. Die Lochdichten innerhalb einer Perforationsspur sind daher sehr hoch und betragen bis zu 30 Löcher pro Zentimeter Werkstoff, wie es beispielsweise bei der Perforation von Zigarettenmundstückpapier erforderlich ist.

Für die Perforation von Verpackungsmaterialien wie z.B. Kunststofffolien werden jedoch wesentlich geringere Lochdichten, also vielfach größere Lochabstände benötigt, ohne daß die Bahngeschwindigkeit und die Energie pro Loch wesentlich verändert werden sollen. Die geringeren Lochdichten dienen einer höheren Reißfestigkeit und einer geringeren Durchlässigkeit.

Bei den aus dem Stand der Technik bekannten Vorrichtungen zur Substratbehandlung könnte man die gewünschten großen Lochabstände zwar mit niedrigen Polygondrehzahlen erreichen, jedoch wären dann die Pulsenergien viel zu hoch, um noch ein sauberes Loch zu erzielen. Um hier gegenzusteuern, müßte man die Ausgangsleistung an den Lasern reduzieren, was jedoch nicht oder nicht in dem erforderlichen Umfang möglich ist. Eine Vergrößerung des Lochabstands durch Erhöhung der Wickelgeschwindigkeit des bahnförmigen Materials der zu perforierenden Bahn ist derzeitig nicht beherrschbar, denn es wären Geschwindigkeiten von mehreren Tausend Meter pro Minute erforderlich.

Aus dem Stand der Technik sind weiterhin für bestimmte Anwendungszwecke Polygonspiegel bekannt, die in bestimmter Weise und auf den jeweiligen Anwendungszweck bezogen geneigte Oberflächen aufweisen. Aus der DE 40 09 113 A1 ist ein sich drehender Polygonspiegel für einen Laserdrucker bekannt, bei dem die um die Drehachse angeordneten flachen Spiegel mit ihren zur Drehachse parallelen Oberflächen durch kleine Verbindungsflächen voneinander getrennt sind, die eine Oberfläche, vorzugsweise eine Spiegeloberfläche, besitzen, die nicht parallel zur Drehachse verlauft. Damit wird erreicht, daß das von den Verbindungsflächen reflektierte Licht nicht auf die lichtempfindliche Schicht des Laserdruckers auftrifft, sondern nur das von den echten Spiegelflächen abgetastete Licht. Mit den kleinen Verbindungsflächen sollen der aufgrund der Stoßkanten zwischen benachbarten Spiegelflächen resultierende Luftwiderstand und das bei der Umdrehung entstehende Geräusch reduziert werden. Aufgrund der Neigung der Verbindungsflächen kann das auf diesen Flächen abgetastete Licht auf dem lichtempfindlichen Körper kein Geisterbild erzeugen, so daß die Druckqualität des Laserdruckers nicht verschlechtert wird. In der DE 197 13 826 A1 ist eine Radarvorrichtung beschrieben, die einen sich drehenden Polygonspiegel mit einer Mehrzahl von Spiegeloberflächen aufweist, von denen jede eine unterschiedliche Neigung bezüglich der Drehachse des Polygonspiegels aufweist. Durch Drehen des Polygonspiegels wird ein horizontaler Abtastvorgang ausgeführt, während ein vertikaler Abtastvorgang durch die Spiegeloberflächen mit den unterschiedlichen Neigungen durchgeführt wird. Zu jeder Zeit, zu der ein einfallender Strahl zu einer unterschiedlichen Spiegeloberfläche abgestrahlt wird, wird der horizontale Abtastvorgang an einer unterschiedlichen Höhenstelle, die proportional zu den Neigungswinkeln jeder Spiegeloberfläche ist, wiederholt.

Der vorliegenden Erfindung liegt die Aufgabe zugrunde, die aus dem Stand der Technik bekannten Vorrichtungen zur Behandlung eines Substrats mittels Laserstrahlen dahingehend weiter zu entwickeln, daß Perforationsmuster mit einem grösseren Lochabstand als bisher erzeugt werden können, ohne daß die Bahngeschwindigkeit und die Energie pro Loch wesentlich verändert werden muß.

Die Lösung dieser Aufgabe erfolgt bei einer Vorrichtung mit den Merkmalen des Oberbegriffs von Anspruch 1 durch die kennzeichnenden Merkmale. Weiterentwicklungen und vorteilhafte Ausgestaltungen finden sich in den Unteransprüchen 2 bis 10.

Der Hauptvorteil der vorliegenden Erfindung liegt darin, daß eine bestimmte, vorzugsweise kleine, Anzahl von aktiven Spiegelflächen S vorgesehen ist, von denen der Laserstrahl in Richtung des Substrats reflektiert wird, d.h. die aktive Fläche des Polygonspiegels, die zur Substratbehandlung dient, ist vergleichsweise gering bemessen. Ein weiterer Vorteil der Erfindung liegt darin, daß während des Überstreichens der inaktiven Spiegelflächen S' sich die Möglichkeit ergibt, während dieser Zeit den Laser auszuschalten (Unteranspruch 10). Das Schaltverhalten aller handelsüblicher CO 2-Laser erlaubt es nicht, beim Übergang an den Stoßkanten benachbarter Spiegelflächen das Laserlicht ein- und auszuschalten, ohne daß Unregelmäßigkeiten in der Perforation entstehen. Mit Hilfe dieser Pausen, die durch die inaktiven Spiegelflächen S' verfügbar werden, gelangt man zeitlich in einen um Zehnerpotenzen längeren Zeitbereich, innerhalb dem es möglich ist, CO 2-Laser ein- und auszuschalten, ohne daß Verzögerungen und das Ein- bzw. Ausschwingverhalten in der Perforationsspur sichtbar werden. Je nach Anwendungsfall kann auch vorgesehen werden (Unteranspruch 3), daß mehrere Arbeitsebenen aufgespannt werden, d.h. es sind mehrere Reihen von nebeneinander angeordneten Sammellinsen vorgesehen und jeder Reihe ist eine bestimmte, vorzugsweise gleiche, Anzahl von aktiven Spiegelflächen zugeordnet, wobei die aktiven Spiegelflächen für jede Reihe eine andere Neigung aufweisen.

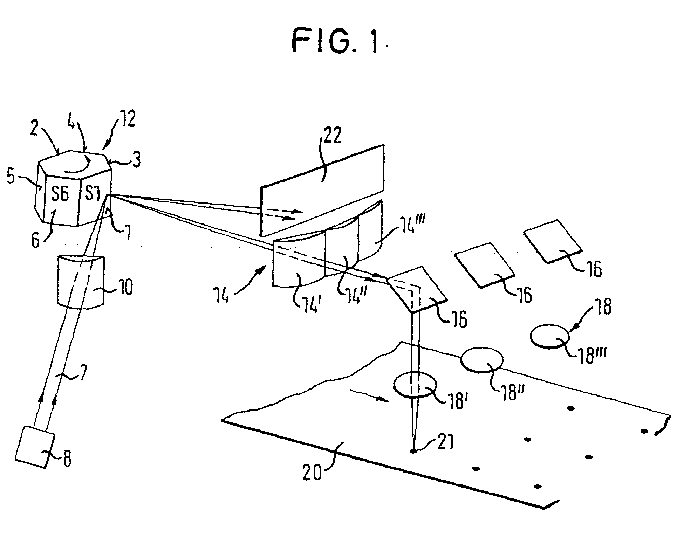

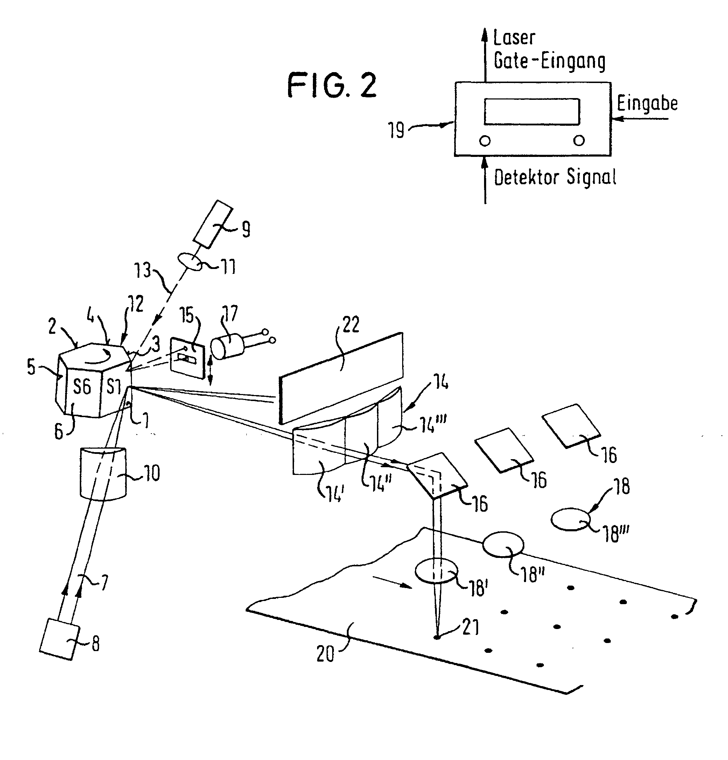

Nachfolgend soll die Erfindung anhand der Fig. 1 und 2 und anhand von Ausführungsbeispielen näher erläutert werden.

Es zeigen:
- Fig. 1: erste Ausführungsform einer erfindungsgemäßen Vorrichtung zur Substratbehandlung mit fester Austastrate, durch Polygon (S,S') definiert (=Grundfaktor);
- Fig. 2: zweite Ausführungsform einer erfindungsgemäßen Vorrichtung zur Substratbehandlung mit variabler Austastrate durch Polygon (S,S') und Steuerelektronik zur Laserabschaltung.

Gemäß Fig. 1 durchläuft der von einem Laser 8 kommende Lichtstrahl eine erste Sammellinse 10, deren Brennpunkt- bzw. Strichebene auf einer Fläche des im Strahlengang hinter der Sammellinse 10 angeordneten Polygondrehspiegels 12 liegt. Der gezeigte Polygonspiegel weist sechs Spiegelflächen auf, von denen die vordere Spiegelfläche 1 und die gegenüberliegende Spiegelfläche 2 parallel zur Drehachse des Polygondrehspiegels ausgebildet sind, während die dazwischenligenden Spiegelflächen 3 bis 6 eine demgegenüber geneigte Spiegelfläche S' besitzen. Die Anzahl der Spiegelflächen kann beliebig sein, sie hängt für eine vorgegebene Zerhackungsfrequenz auch von der mit dem Polygondrehspiegel erreichbaren Drehzahl ab. Bei Drehung des Polygondrehspiegels 12 wird der von einer Spiegelfläche S (hier 1) reflektierte Strahl einen bestimmten Winkelbereich überstreichen, in dem ein erstes Linsensystem 14, bestehend aus drei einzelnen Sammellinsen 14',14",14"' angeordnet ist. Die Sammellinsen haben alle die gleiche Brennweite und eine solche Lage, daß ihr Brennpunkt bzw. ihre Brennebene mit dem Brennpunkt bzw. der Brennebene der Sammellinse 10 auf dem Polygonspiegel zusammenfällt. Das die Linsen 14' bis 14"- verlassene Licht ist daher wieder parallel gerichtet. Die das erste Linsensystem 14 verlassenen Lichtstrahlen werden bei dem in Fig. 1 gezeigten Ausführungsbeispiel durch Umlenkspiegel 16 um 90° abgelenkt und auf ein System fokussierender Linsen 18 geleitet, das aus einzelnen sphärischen Sammellinsen 18', 18", 18"' besteht, welche die auf sie auftreffenden parallelen Lichtstrahlen auf eine unter bzw. im Strahlengang hinter dem Linsensystem 18 liegende bahnförmige Material 20 fokussieren. Der Abstand des Linsensystems 18 von der Bahn 20 entspricht also der Brennweite der einzelnen Sammellinsen 18',18" und 18"'. Bei weiterer Drehung des Polygondrehspiegels tritt dann die nächste Spiegelfläche S' (hier 6) in Wirkung und lenkt aufgrund ihrer Neigung gegenüber der Drehachse den auf sie auftreffenden Laserstrahl 7 auf einen über dem Linsensystem 14 angeordneten Absorber 22. Da vorliegend zwischen den Spiegelflächen S jeweils zwei geneigte Spiegelflächen S' vorgesehen sind, erhält man zunächst nur noch 1/3 der seriellen Lochdichte verglichen mit einem Standardgerät zur Substratbehandlung gemäß dem eingangs genannten Stand der Technik. Eine weitere Reduktion der seriellen Lochdichte läßt sich erzielen, wenn man einen Polygondrehspiegel mit einer wesentlich größeren Anzahl von Spiegelflächen verwendet und hierbei nur zwei, sich gegenüberliegende Spiegelflächen S zur Perforation verwendet, während sämtliche anderen Spiegelflächen als geneigte Spiegelflächen S' vorgesehen sind.

In einer Weiterentwicklung der erfindungsgemäßen Vorrichtung wird gemäß Fig. 2 zusätzlich eine Laserdiode 9 mit Optik 11 vorgesehen, deren Laserstrahl 13 als Meßstrahl auf dieselbe Spiegelfläche (hier 1) gelenkt wird, auf die auch der Bearbeitungslaserstrahl 7 auftrifft. Der Meßstrahl 13 wird von dem Polygondrehspiegel 12 auf eine Schlitzblende 15 abgelenkt, hinter der ein Fotodetektor 17 angeordnet ist. Die Schlitzblende 15 arbeitet als Filter zur Unterscheidung der verschiedenen Spiegelflächen S (ungeneigt) und S' (geneigt). Schlitzblende 15 und Fotodetektor 17 sind höhenverstellbar, um entsprechend der Neigung der Spiegelflächen und des von diesen reflektierten Meßstrahls eingestellt werden zu können. Der schnelle Fotodetektor 17 leitet das Meßsignal zur Synchronisation an eine elektronische Steuerung 19, mit der der Laserstrahl 7 ein- und ausgeschaltet werden kann, wenn die verkippten Spiegelflächen S' detektiert werden, d.h. wenn der Laserstrahl inaktive Spiegelflächen S' überstreicht. Zum Generieren des synchronisierten Austastsignals kann der Meßstrahl 13 auf jede beliebige, vom Anwendungsfall abhängige, Spiegelfläche S oder S' ausgerichtet werden. Die elektronische Steuerung 19 ermöglicht es, den über den Gate-Eingang angesteuerten Laser 8 synchronisiert zur Position der Spiegelflächen S und S' auszutasten, wobei ein bestimmter Austastfaktor vom Bediener einstellbar ist. Werden z.B. bei einem 16-strahligen Perforationsgerät mit einem 14-facetten-Polygondrehspiegel zwei gegenüber angeordnete Spiegelflächen zum Perforieren in eine erste Fächerebene (Arbeitsebene) benutzt, erhält man zwei Bereiche mit je sechs Facetten, die den Strahl in eine zweite Fächerebene lenken und im Absorber vernichten. Damit erhält man zunächst nur noch 1/7 der seriellen Lochdichten gegenüber einem Standard-Perforationsgerät. Aktiviert man die Elektronik zum Austasten des Lasers, welche in Echtzeit die Position der Spiegelflächen S und S' erkennen kann, besteht die Möglichkeit, während des Überstreichens der je sechs Facetten den Laser ein- bzw. auszuschalten. Damit kann der serielle Perforationsabstand um ganzzahlige Vielfache des polygonabhängigen Grundfaktors (hier 7), also 7,14,21,28 etc. vergrößert werden.

Je nach Anwendung ist es ausreichend, ein festes, nur durch die Anzahl N der Spiegelflächen auf dem Polygondrehspiegel vorgegebenes Austastverhältnis (Grundfaktor), zu verwenden. Vielfache und variabel einstellbare Lochabstände können jedoch nur mit Hilfe der elektronischen Austastung des Lasers erzielt werden.

Welche der Spiegelflächen parallel zur Drehachse des Polygondrehspiegels liegen und welche eine Neigung gegenüber dieser Drehachse aufweisen sollen, hängt vom Einzelfall ab und kann neben anwendungstechnischen Gründen auch von fertigungstechnischen Überlegungen abhängen. Jedenfalls ist der Erfindungsgegenstand nicht auf das hier beschriebene Ausführungsbeispiel beschränkt, bei dem die aktiven Spiegelflächen parallel zur Drehachse liegen. Umgekehrt können ebenso die inaktiven Spiegelflächen parallel zur Drehachse liegen.

### Bezugszeichenliste

- 1,2: aktive Spielgelflächen S1
- 3 bis 6: geneigte Spiegelflächen S2
- 7: Laserstrahl
- 8: Laser
- 9: Laserdiode
- 10,11: Sammellinsen
- 12: Polygonspiegel
- 13: Meßstrahl
- 14: Linsensystem
- 14',14",14"': Sammellinsen des Linsensystems 14
- 15: Schlitzblende
- 16: Umlenkspiegel
- 17: Fotodetektor
- 18: zweites Linsensystem
- 18',18",18"': sphärische Sammellinsen des Linsensystems 18
- 19: elektronische Steuerung
- 20: bahnförmiges Material
- 21: Brennflecke (Löcher)
- 22: Absorber

## Patentansprüche

1. Vorrichtung zur Behandlung eines Substrates mittels Laserstrahlen, mit der ein eintretender Laserstrahl (7) in verschiedene Ausgangsstrahlwege gelenkt werden kann, mit einem sich drehenden Polygonspiegel (12) mit N Spiegelflächen zum Schwenken eines von einer Laserstrahlquelle kommenden Laserstrahls (7) über ein System von nebeneinander angeordneten, fokussierenden Sammellinsen, (14', 14", 14'''), deren Brennebenen auf der Oberfläche des zu behandelnden Substrats liegen, **dadurch gekennzeichnet, daß** auf dem Polygonspiegel eine Anzahl von aktiven Spiegelflächen S vorgesehen ist, von denen der einfallende Laserstrahl auf das System der Sammellinsen gelenkt wird und daß die restlichen Spiegelflächen S' die auch inaktive Spiegelflächen genannt werden, eine andere Neigung wie die aktiven Spiegelflächen S aufweisen.

2. Vorrichtung nach Anspruch 1, **dadurch gekennzeichnet, daß** ein Absorber (22) vorgesehen ist, auf den der von den Spiegelflächen S' reflektierte Laserstrahl gelenkt wird.

3. Vorrichtung nach Anspruch 1 oder 2, **dadurch gekennzeichnet, daß** das System der Sammellinsen aus mehreren Reihen der nebeneinander angeordneten, fokussierenden Sammellinsen besteht, daß jeder Reihe eine bestimmte Anzahl der aktiven Spiegelflächen zugeordnet ist, wobei die aktiven Spiegelflächen für jede Reihe eine andere Neigung aufweisen.

4. Vorrichtung nach einem der Ansprüche 1 bis 3, **dadurch gekennzeichnet, daß** zwischen benachbarten aktiven Spiegelflächen S eine odere mehrere inaktive Spiegelflächen S' vorgesehen sind.

5. Vorrichtung nach einem der Ansprüche 1 bis 4, **dadurch gekennzeichnet, daß** N eine gerade Zahl ist und daß zwei sich gegenüberliegende aktive Spiegelflächen S vorgesehen sind.

6. Vorrichtung nach einem der Ansprüche 1 bis 3, **dadurch gekennzeichnet, daß** N eine gerade Zahl ist und daß zwei sich gegenüberliegende inaktive Spiegelflächen S'vorgesehen sind.

7. Vorrichtung nach einem der Ansprüche 1 bis 6, **dadurch gekennzeichnet, daß** eine optische Meßeinrichtung zum Erfassen der Positionen der Spiegelflächen S und S' vorgesehen ist.

8. Vorrichtung nach Anspruch 7, **dadurch gekennzeichnet, daß** die optische Meßeinrichtung eine Lichtquelle (9) zum Aussenden eines Meßstrahls (13) auf den Polygondrehspiegel und einen Photodetektor (17) zum Erfassen des von dem Polygondrehspiegel reflektierten Meßstrahls umfaßt.

9. Vorrichtung nach Anspruch 8, **dadurch gekennzeichnet, daß** vor dem Photodetektor eine Schlitzblende (15) angeordnet ist und daß die Position des Schlitzes und/oder die Position des Photodetektors parallel zur Drehachse des Polygondrehspiegels verändert werden kann.

10. Vorrichtung nach einem der Ansprüche 7 bis 9, **dadurch gekennzeichnet, daß** eine elektronische Steuerung (19) vorgesehen ist, mit der der Laserstrahl ein- und ausgeschaltet werden kann, wenn dieser inaktive Spiegelflächen S' überstreicht.

## Claims

1. Device for treating a substrate by means of laser beams, with the aid of which an incoming laser beam (7) can be directed into various output beam paths, having a rotating polygonal mirror (12) with N reflecting faces for swivelling a laser beam (7) coming from a laser beam source over a system of focusing positive lenses (14', 14'', 14'''), which are arranged next to one another and whose focal planes lie on the surface of the substrate to be treated, **characterized in that** a number of active reflecting faces S are provided on the polygonal mirror, from which the incident laser beam is directed onto the system of the positive lenses, and **in that** the remaining reflecting faces S', which are also called inactive reflecting faces, have a different inclination than the active reflecting faces S.

2. Device according to Claim 1, **characterized in that** an absorber is provided onto which the laser beam reflected from the reflecting faces S' is directed.

3. Device according to Claim 1 or 2, **characterized in that** the system of the positive lenses comprises a plurality of rows of focusing positive lenses arranged next to one another, and **in that** each row is assigned a specific number of the active reflecting faces, the active reflecting faces having a different inclination for each row.

4. Device according to one of Claims 1 to 3, **characterized in that** one or more inactive reflecting faces S' are provided between adjacent active reflecting faces S.

5. Device according to one of Claims 1 to 4, **characterized in that** N is an even number, and **in that** two mutually opposite active reflecting faces S are provided.

6. Device according to one of Claims 1 to 3, **characterized in that** N is an even number, and **in that** two mutually opposite inactive reflecting faces S' are provided.

7. Device according to one of Claims 1 to 6, **characterized in that** an optical measuring device is provided for detecting the positions of the reflecting faces S and S'.

8. Device according to Claim 7, **characterized in that** the optical measuring device comprises a light source (9) for emitting a measuring beam (13) onto the polygonal rotating mirror, and a photodetector (17) for detecting the measuring beam reflected from the polygonal rotating mirror.

9. Device according to Claim 8, **characterized in that** a slotted diaphragm (15) is arranged in front of the photodetector, and **in that** the position of the slot and/or the position of the photodetector can be varied parallel to the axis of rotation of the polygonal rotating mirror.

10. Device according to one of Claims 7 to 9, **characterized in that** an electronic control (19) is provided with the aid of which the laser beam can be switched on and off when it sweeps over inactive reflecting faces S'.

## Revendications

1. Dispositif de traitement d'un substrat au moyen d'un rayonnement laser, par lequel un rayonnement (7) laser incident peut être dévié dans divers trajets de rayonnement de sortie comprenant un miroir (12) polygonal tournant ayant N surfaces de miroir pour faire basculer un rayonnement (7) laser provenant d'une source de rayonnement laser sur un système de lentilles (14', 14", 14"') convergentes de focalisation disposées les unes à côté des autres et dont les plans focaux sont sur la surface du substrat à traiter, **caractérisé en ce qu'**il est prévu sur le miroir polygonal un certain nombre de surfaces S actives de miroir à partir desquelles le rayonnement laser incident est dévié sur le système de lentilles convergentes et **en ce que** les surfaces S' restantes de miroir (qui sont dénommées les surfaces inactives de miroir) ont une autre inclinaison que les surfaces S actives de miroir.

2. Dispositif suivant la revendication 1, **caractérisé en ce qu'**il est prévu un absorbeur (22) sur lequel le rayonnement laser réfléchi par les surfaces S'de miroir est dévié.

3. Dispositif suivant la revendication 1 ou 2, **caractérisé en ce que** le système des lentilles convergentes est constitué de plusieurs rangées de lentilles convergentes de focalisation disposées les unes à côté des autres, **en ce qu'**à chaque rangée est associé un nombre déterminé des surfaces actives de miroir, les surfaces actives de miroir ayant, pour chaque rangée, une inclinaison différente.

4. Dispositif suivant les revendications 1 à 3, **caractérisé en ce qu'**il est prévu, entre les surfaces S actives de miroir voisines, une ou plusieurs surfaces S' inactives de miroir.

5. Dispositif suivant une des revendications 1 à 4, **caractérisé en ce que** N est un nombre entier et **en ce qu'**il est prévu deux surfaces S actives de miroir opposées.

6. Dispositif suivant les revendications 1 à 3, **caractérisé en ce que** N est un nombre entier et **en ce qu'**il est prévu deux surfaces S' inactives de miroir opposées.

7. Dispositif suivant les revendications 1 à 6, **caractérisé en ce qu'**il est prévu un dispositif optique de mesure pour détecter les positions des surfaces S et S' de miroir.

8. Dispositif suivant la revendication 7, **caractérisé en ce que** le dispositif optique de mesure comprend une source (9) de lumière d'émission d'un rayonnement (13) de mesure sur le miroir polygonal toumant et un photodétecteur (17) de détection du rayonnement mesuré réfléchi par le miroir polygonal tournant.

9. Dispositif suivant la revendication 8, **caractérisé en ce qu'**avant le photodétecteur est disposé un diaphragme (15) à fentes et **en ce que** la position de la fente et/ou la position du photodétecteur peut être modifiée parallèlement à l'axe de rotation du miroir polygonal tournant.

10. Dispositif suivant les revendications 7 à 9, **caractérisé en ce qu'**il est prévu une commande (19) électronique par laquelle le rayonnement laser peut être mis en fonctionnement et hors de fonctionnement lorsque celui-ci balaye des surfaces S' inactives de miroir.
